# EUROPÄISCHE PATENTSCHRIFT

(11) **EP 1 051 793 B1**
(45) Veröffentlichungstag und Bekanntmachung des Hinweises auf die Patenterteilung: **17.10.2001**
(21) Anmeldenummer: 99907480.0
(22) Anmeldetag: 02.02.1999
(51) Int. Cl.: H02K 7/11, H02K 55/02, H02K 7/09

(54) **ELEKTRISCHER TURBOGENERATOR**
ELECTRIC TURBOGENERATOR
TURBOGENERATEUR ELECTRIQUE

(30) Priorität: 03.02.1998 DE 19804208
(43) Veröffentlichungstag der Anmeldung: 15.11.2000
(73) Patentinhaber: Belitz, Frank, 90403 Nürnberg (DE)
(72) Erfinder: Belitz, Frank, 90403 Nürnberg (DE)
(74) Vertreter: Kuhnen & Wacker
(86) Internationale Anmeldenummer: EP9900679
(87) Internationale Veröffentlichungsnummer: WO9940670

(56) Entgegenhaltungen:
- EP-A- 0 526 143
- EP-A- 0 598 183
- DE-A- 4 105 352
- US-A- 4 816 708
- US-A- 4 945 811
- US-A- 5 331 819
- DATABASE WPI Section PQ, Week 8636 Derwent Publications Ltd., London, GB; Class Q73, AN 86-237522 XP002107214 -& SU 1 206 560 A (CENT ASIA GAS UTILI) , 23. Januar 1986

## Beschreibung

Die Erfindung betrifft einen elektrischen Turbogenerator der Synchronmaschinenbauart, für Drehzahlen über 30.000 1/min.

Grenzleistungs-Synchronmaschinen, welche in Kraftwerksblöcken zur Stromerzeugung dienen, arbeiten mit sehr hohen Wirkungsgraden und bilden Energieerzeugungseinheiten extrem hoher Leistung. Die bei solchen Synchron-Turbogeneratoren verwendeten Technologien lassen sich in vielen Fällen aber nicht auf kleinere Stromerzeugungseinheiten übertragen, so daß der Bedarf an elektrischen Turbogeneratoren der Synchronmaschinenbauart hoher Leistungsdichte auch für kleinere Leistungen besteht, um solchen Maschinen ein breites Feld von Anwendungen zu eröffnen, etwa in leichten mobilen Kraftwerkszentralen, innerhalb von Anlageteilen, in denen wenig Raum zur Verfügung steht, zur Ausnutzung von als Nebenprodukt von Prozessen anfallender Primärenergie und dergleichen.

Aus der europäischen Patentanmeldung, Veröffentlichungsnummer 0 598183 ist ein elektrischer Turbogenerator der Synchronmaschinenbauart bekannt, dessen Rotor Permanentmagnete zur Erzeugung des Erregermagnetfeldes trägt, dessen Vektor oder dessen Vektoren mit der Rotorantriebsdrehzahl umlaufen und dessen Stator einen magnetisierbaren Statorkörper und eine abschnittsweise darin eingebettete Statorwicklung enthält und der ferner ein den Rotor und den Stator umgebendes Außengehäuse und den Rotor beiderseits des Stators radial am Außengehäuse abstützende Lageranordnungen enthält. Ein Turbinenrad ist bei dieser bekannten Maschine jenseits einer der Lageranordnungen fliegend an der Rotorwelle befestigt und der Rotor wird mittels des Turbinenrades mit einer Drehzahl über 30.000 Umdrehungen je Minute angetrieben. Eine vorgespannte Manschette aus hochfestem Werkstoff umgibt die Permanentmagnete des Rotors zur Abstützung der Permanentmagnete gegen die hohen Fliehkräfte. Die Lageranordnungen haben bei der bekannten Maschine die Gestalt aktiver, in Abhängigkeit von Stellungssensoren gesteuerter Magnet- Schwebelager, welche eine Rotorabstützung in Radialrichtung und in Axialrichtung bewirken, derart, daß im Betrieb der Rotor berührungslos im Stator und in den Lageranordnungen gehalten ist.

Aus der DE-PS 22 09 353 ist es bekannt, Energiespeicherrotoren mit einer Wechselstrommaschine zu kuppeln, welche einen radial innenliegenden, mit einer mehrpoligen Wicklung versehenen Stator und einen den Stator umgebenden, mit Permanentmagneten bestückten Rotor aufweist, der durch Magnetlager abgestützt ist und der die Gestalt einer Nabe des Energiespeicherrotors hat. Der gesamte Energiespeicherrotor ist in einem evakuierten Gehäuse untergebracht.

Ferner ist in der DE-PS 27 53 461 eine elektrische Maschine mit Kryogenkühlung beschrieben, bei welcher der Spalt zwischen Rotor und Stator evakuierbar ist, wozu in Ringräumen zwischen Stirnflächen des Rotors einerseits und des Stators andererseits ineinandergreifende Teile von Turbo-Molekularpumpen vorgesehen sind, die zur Errichtung des Vakuums im Spaltraum zwischen Rotor und Stator beitragen.

Aus DATABASE WPI Section PQ, Week 8636 Derwent Publications Ltd., London, GB; Class Q73, A 86-237522 XP002107214-&SU 1 206 560 A (CENT ASIA GAS UTILI), 23. Januar 1986 ist es bekannt, den Motorgenerator eines Turbinenbrenners für Heizkessel und dergleichen zur Verminderung der Luftreibungsverluste in ein Vakuumgehäuse zu setzen. Bei dieser bekannten Vorrichtung trägt ein Rotorwellenende eine innerhalb eines Außengehäuses gelegene Kupplungshälfte einer berührungsfrei wirkenden Magnetkupplung, deren andere Kupplungshälfte außerhalb dieses Außengehäuses angeordnet und mit einer Antriebsmaschine gekuppelt ist, wobei mindestens der zwischen den Kupplungshälften befindliche Außengehäuseteil aus magnetfelddurchlässigem Material besteht. Der Generator mit seinem eigenen Generatorgehäuse ist in dem obengenannten Gehäuse angeordnet, wobei dieses Außengehäuse evakuierbar ist.

Aus der US-A-4816 708 ist es bekannt, eine Synchronmaschine, deren Wicklungen tieftemperaturgekühlt sind, mit einem evakuierten Gehäuse zu versehen. Sowohl die Statorwicklung als auch die Rotorwicklung sind bei der bekannten Synchronmaschine tieftemperaturgekühlt.

Schließlich seien allgemein zum Stande der Technik noch die US-A-5 331 819 und die DE 41 05 352 A genannt, wobei erstere supraleitende Wicklungen rotierender elektrischer Maschinen aufgrund Tieftemperaturkühlung offenbart und letztere sich mit Pulververbundwerkstoffen für die magnetisch aktiven Teile rotierender elektrischer Maschinen befaßt.

Aufgabe der Erfindung ist es, einen elektrischen Turbogenerator, welcher die Merkmale des Oberbegriffes von Anspruch 1 aufweist, wie sie aus der weiter oben erwähnten Europäischen Patentanmeldung, Veröffentlichungsnummer 0 598 183 bekannt sind, so auszubilden, daß eine weitere Erhöhung des Wirkungsgrades und eine Erniedrigung des Leistungsgewichtes erreicht werden.

Diese Aufgabe wird erfindungsgemäß durch die in Anspruch 1 angegebenen Merkmale gelöst.

Es hat sich gezeigt, daß es durch besondere Maßnahmen möglich ist, die Rotordrehzahl weiter zu erhöhen, beispielsweise auf etwa 60.000 Umdrehungen je Minute, wobei dann die Ausgangsfrequenz der im Stator induzierten Spannung bei Verwendung eines einpoligen Rotors auf 1 kHz steigt. Spannungen mit dieser Frequenz lassen sich problemlos gleichrichten oder mit elektronisch gesteuerten Umrichtern auf Netzfrequenz reduzieren. Die hohe Rotordrehzahl gestattet die Verringerung der von der Antriebsmaschine zu übertragenden Drehmomente und damit die Verringerung der für die Übertragung der Antriebsenergie vorzusehenden Querschnitte eines den Turbogenerator enthaltenden Maschinensatzes.

Allerdings wird bei hohen Drehzahlen über 30.000 Umdrehungen je Minute und bei Berücksichtigung der engen Luftspalte zwischen Rotor und Stator die Luftreibung und die hieraus resultierende Erwärmung sehr groß. Enge Luftspalte zwischen dem Rotor und dem Stator ergeben sich dann, wenn der Rotor permanentmagnetbestückt ist und die Permanentmagnete durch eine Bandage aus magnetfelddurchlässigem Material gegen die beträchtlichen Fliehkräfte bei hohen Drehzahlen am Rotor festgehalten werden. Diese Bandage ist in dem Zwischenraum zwischen den magnetisch aktiven Teilen von Rotor und Stator unterzubringen und verkleinert dadurch den für die Luftreibung verantwortlichen Spalt, so daß bei Turbogeneratoren der eingangs beschriebenen Bauart im Bereich zwischen Rotor und Stator ähnliche Luftreibungsverluste auftreten wie im Bereich der sich beidseitig anschließenden Magnetlager, weshalb bei den hohen Drehzahlen beträchtliche Erwärmungsprobleme auftreten, die man bisher durch Einleitung kühlender Luft oder kühlenden Gases in den Spaltraum zwischen dem Rotor und dem Stator bei Maschinen der eingangs betrachteten Art zu lindem suchte.

Hier schafft die Bifindung durch die Evakuierung des freien Raumes zwischen Stator und Rotor unter Verzicht auf die Einleitung von Kühlgas in diesem Raum Abhilfe.

Gemäß der hier angegebenen Lösung ist das Außengehäuse so ausgebildet, daß es den Rotor und seine Lageranordnungen vollständig umgibt und hermetisch einschließt und der Rotor ist mit der Antriebsmaschine über eine berührungslos arbeitende, durch einen Ansatz des Außengehäuses hindurch wirkende Magnetkupplung verbunden.

Die Lageranordnungen beidseits des Rotorpolrades haben die Gestalt an sich bekannter, in radialer und axialer Richtung wirkender Magnet-Schwebelager, die bei der Evakuierung des Außengehäuses und damit auch der Lagerspalte wegen der dort nicht auftretenden Berührungen zwischen Lagerflächen den Vorteil haben, im Vakuum auftretende Verschweißungserscheinungen auszuschließen.

Ein weiterer wesentlicher Vorteil der Evakuierung des Spaltraumes zwischen Stator und Rotor ist die hohe thermische Isolationswirkung dieses Spaltraumes bezüglich eines Wärmeüberganges zwischen Stator und Rotor.

Durch die Evakuierung des Spaltraumes fällt ein Wärmeübergang durch Konvektion im wesentlichen weg. Werden darüberhinaus die einander gegenüberstehenden Flächen von Stator und Rotor mit einer Verspiegelung versehen, so wird auch ein Wärmeübergang durch Strahlung zwischen Rotor und Stator weitgehend unterbunden.

Bedeutsam ist diese Wirkung vornehmlich dann, wenn die Statorwicklung von hochfrequenten elektrischen Strömen durchflossen ist und folglich die Ummagnetisierungsverluste in dem auf der Seite des Stators gelegenen Teil des magnetischen Schließungskreises vergleichsweise hoch werden.

Diese Ummagnetisierungsverluste des Stators können gemäß einer zweckmäßigen Ausführungsform dadurch herabgesetzt werden, daß der statorseitige Teil des magnetischen Schließungskreises aus weichmagnetischem Pulververbundwerkstoff hergestellt ist, wodurch die Ummagnetisierungsverluste und Wirbelstromverluste gegenüber den Verhältnissen bei einem Stator-Blechpaket beträchtlich vermindert werden.

Schließlich sei noch auf den Vorteil der Evakuierung des Spaltraumes zwischen Stator und Rotor und ggf. der Verspiegelung der einander gegenüberstehenden Stator- und Rotorflächen bezüglich der hohen thermischen Isolationsfähigkeit dieses Spaltraumes für solche Konstruktionen hingewiesen, bei denen der gesamte Statorkörper oder auch nur die Statorwicklung tieftemperaturgekühlt werden, um Supraleitungseigenschaften einer aus entsprechenden Werkstoffen gefertigten Statorwicklung auszunützen.

Im übrigen bilden zweckmäßige Ausgestaltungen und Weiterbildungen des hier angegebenen elektrischen Turbogenerators Gegenstand der dem Anspruch 1 nachgeordneten Patentansprüche.

Einige Ausführungsformen werden nachfolgend unter Bezugnahme auf die Zeichnung näher erläutert. Es stellen dar:
Fig. 1 eine teilweise im Schnitt gezeichnete Seitenansicht eines Turbogenerators der hier angegebenen Art,
Fig. 2 einen ausschnittsweisen Radialschnitt entsprechend der in Fig. 1 angedeuteten Schnittlinie II-II, und
Fig. 3 einen Radialschnitt durch den Turbogenerator nach Fig. 1 entsprechend der Schnittlinie III-III.

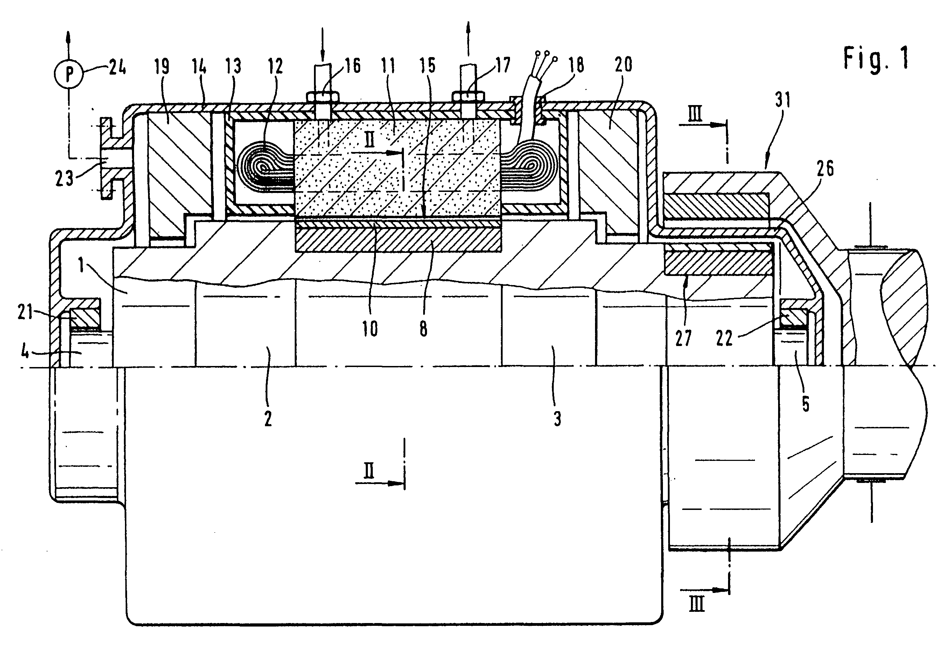

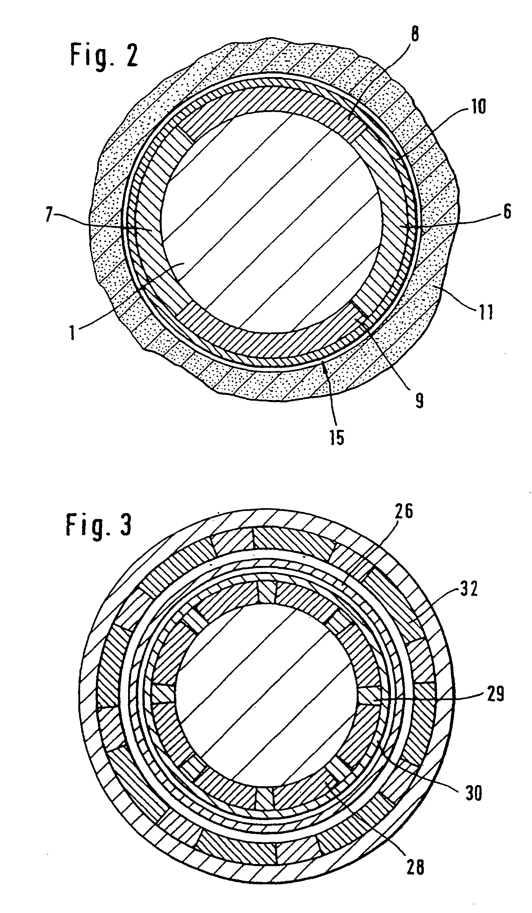

Der Turbogenerator nach Fig. 1 enthält eine Welle 1 aus einem Stahl guter mechanischer und magnetischer Eigenschaft. Die Welle 1 trägt zwei Bünde 2 und 3 in einem gegenseitigen axialen Abstand entsprechend der axialen Länge des Generatorpolrades, sowie zwei Wellenstümpfe 4 bzw. 5 an den jeweiligen Wellenenden. Zwischen den Bünden 2 und 3 sind, wie aus der Querschnittsdarstellung von Fig. 2 ersichtlich, zwischen hohlzylindersektorförmigen, aus unmagnetischem Werkstoff bestehenden Füllstücken 6 und 7 ebenfalls hohlzylindersektorförmige Permanentmagnetstücke 8 und 9 eingesetzt, welche einander am Wellenumfang diametral gegenüberstehen und in Richtung ihrer radialen Dicke so magnetisiert sind, daß am Außenumfang des einen Permanentmagneten ein Nordpol und am Außenumfang des anderen Permanentmagneten ein Südpol dargeboten ist.

Die Permanentmagneten 8 und 9 können jeweils aus mehreren in Umfangsrichtung nebeneinander gesetzten, sich radial erstreckenden Hohlzylindersektorleisten zusammengesetzt sein.

In Abwandlung hiervon ist es auch möglich, die Permanentmagneten und die Füllstücke als ein sich axial erstreckendes Paket von Magnetkörperringen zusammenzusetzen, die in Umfangsbereichen entsprechend den in Fig. 2 gezeigten Permanentmagnetkörpem 8 und 9 eine selektive starke Magnetisierung zur Erzeugung der Pole aufweisen. Bei dieser Konstruktion ist zum Aufschieben des Permanentmagnet-Ringpaketes mindestens einer der Bünde 2 oder 3 abnehmbar auf dem Wellenkörper montiert.

In weiterer Abwandlung gegenüber der gezeigten Ausführungsform kann das Polrad zwischen den Wellenbünden 2 und 3 auch mit zwei Polpaaren ausgeführt sein, wobei am Umfang fortschreitend vier hohlzylindersektorförmige Permanentmagneten mit abwechselnd entgegengeseetzter radialer Magnetisierungsrichtung in gleichmäßigen Abständen zwischen Füllstücken angeordnet sind.

Der Wellenkörper zwischen den Wellenbünden 2 und 3, der die Permanentmagnete und die Füllstücke auf ihren Zylinder-innenflächen abstützt, bildet bei Polrädern mit der Polpaarzahl 1 und auch bei Polrädern mit größerer Polpaarzahl den jeweiligen inneren magnetischen Rückschluß.

Auf ihrer gemeinsamen zylindrischen Außenfläche sind die Permanentmagneten 8 und 9 und die Füllstücke 6 und 7 von einer zylindrischen Haltemanschette 10 umgeben. Die Haltemanschette 10 kann in mehreren Lagen auf das Polrad aufgewickelt sein oder kann, wenn in Abwandlung gegenüber der Darstellung nach Fig. 1 einer der Wellenbünde 2 und 3 mit entsprechend geringerem Durchmesser ausgeführt ist, axial auf das Polrad aufgezogen werden. Sowohl beim Aufwickeln als auch beim Aufziehen der Haltemanschette 10 wird für eine solche, durch die Haltemanschette 10 auf die Permanentmagnete, die Füllstücke und die Welle ausgeübte Vorspannung Rechnung getragen, daß die Permanentmagnete und die Füllstücke bis zu der Schleuderdrehzahl des Turbogenerators gegen die Welle 1 gedrückt bleiben. Zu diesem Zwecke werden die einzelnen Lagen einer aufzuwickelnden Haltemanschette 10 mit entsprechender Tangentialspannung gewickelt. Im Falle des Aufziehens der Haltemanschette 10 wird bei der Montage die Haltemanschette erhitzt und der Rotor im Bereich des Polrades beispielsweise in flüssiger Luft gekühlt.

Bevorzugte Werkstoffe für eine in Lagen aufzuwickelnde Haltemanschette 10 sind Bänder aus kohlefaserverstärktem Verbundwerkstoff oder unmagnetischer Stahldraht hoher Zugfestigkeit. Eine bei großem Temperaturunterschied der zusammenzufügenden Teile aufzuziehende Haltemanschette 10 kann aus einem dünnwandigen Zylinder magnetfelddurchlässigen Stahls gefertigt sein. Jedenfalls ist das Material der Haltemanschette 10 so gewählt, daß sie die erforderliche, radial einwärts gerichtete Stützkraft für die Permanentmagnete 8 und 9 bei ausreichender Dünnwandigkeit aufzubringen vermag und ein magnetischer Kurzschluß zwischen den Polen des Polrades vermieden wird.

Die Permanentmagneten 8 und 9 bestehen aus mit extrem hoher Magnetisierung versehenen Seltenerden-Magnetwerkstoffen, beispielsweise Neodim-Magnetwerkstoff oder Samarium-Kobalt-Magnetwerkstoff.

Im Bereich der Axiallänge des die Permanentmagneten 8 und 9 enthaltenden Polrades ist der Rotor von einem Statorkörper 11 umgeben, welcher in sich zur zentrischen Bohrung des Statorkörpers 11 hin öffnenden Nuten eine mehrphasige Statorwicklung 12 aufnimmt. Der Aufbau einer solchen mehrphasigen Statorwicklung und die Anordnung und ggf. Aufteilung der Wicklungsspulen in den Nuten des Statorkörpers 11 ist dem Fachmann an sich bekannt.

Bei der gezeigten Ausführungsform besteht der Statorkörper 11 aus einem weichmagnetischen Pulververbundwerkstoff, welcher bei Ummagnetisierungsfrequenzen bis in den kHz-Bereich geringe Ummagnetisierungsverluste aufweist.

Der Statorkörper 11 und die Wickelköpfe der Statorwicklung 12 sind von einem Isolationsmantel 13 zur thermischen Isolation des Stators gegenüber seiner Umgebung umschlossen. Auf seiner Außenseite grenzt der Isolationsmantel 13 an das den Turbogenerator enthaltende Außengehäuse 14 an und auf seiner Innenseite ist der Isolationsmantel 13 in der aus Fig. 1 erkennbaren Weise derart unterbrochen, daß der Statorkörper 11 radial nach einwärts durch die rundumlaufende Öffnung des Isolationsmantels 13 hindurchreicht und somit der zylindrischen Außenfläche der Haltemanschette 10 des Rotors unmittelbar über einen engen Luftspalt 15 gegenübersteht.

Durch das Außengehäuse 14 und den Isolationsmantel 13 hindurch führen zu, den Statorkörper 11 durchziehenden Kühlmittelkanälen in Fig. 1 schematisch angegebene Kühlmittelanschlüsse 16 und 17, und ferner dient eine Durchführung 18 zum Durchführen der elektrischen Anschlußleitungen für die Wicklungsspulen der Statorwicklung 12 durch den Kühlmantel 13 und das Außengehäuse 14 hindurch.

Ist gemäß einer weiterentwickelten Ausführungsform des Turbogenerators die Statorwicklung 12 aus Leitermaterial gefertigt, das mindestens in bestimmten Abschnitten des Wicklungsverlaufes Supraleitungseigenschaften hat, so wird mindestens der Statorkörper 11 mit Kühlmittel auf Supraleitungstemperatur gekühlt. Das Kühlmittel kann auch durch Kanäle innerhalb der Leiter der Statorwicklung 12 geführt werden. Die Kühlung kann auch auf den Bereich der Wickelköpfe der Statorwicklung erstreckt werden.

Zur Abstützung der Rotorwelle 1 dienen berührungslos arbeitende, die Rotorwelle 1 in radialer Richtung und in axialer Richtung abstützende, abhängig von Stellungsfühlersignalen steuerbare Magnetschwebelager 19 und 20, die in der aus Fig. 1 ersichtlichen Weise im Bereich von Absätzen der Wellenbünde 2 und 3 mit der Rotorwelle 1 zusammenwirken und eine berührungsfreie und schwingungsfreie Lagerung der Rotorwelle bis zu Drehzahlen über 60.000 Umdrehungen je Minute ermöglichen.

Außerdem befinden sich am Lagergehäuse 14 im Bereich der Wellenstümpfe 4 und 5 am Rotorwellenende Hilfslager 21 bzw. 22, welche mit Gleitlagerbüchsen ausgerüstet sind, deren Lagerspiel zu den Wellenstümpfen 4 und 5 in Relation zum Lagerspiel der Magnet-Schwebelager 19 und 20 und in Relation zur Weite des Luftspaltes 15 zwischen Polrad und Statorkörper so bemessen ist, daß die Hilfslager 21 und 22 den Rotor bei Stillstand, im Anlauf oder im Notbetrieb abstützen, ohne daß eine Berührung zwischen dem Rotor und den Lageranordnungen 19 und 20 bzw. zwischen dem Rotor und dem Statorkörper 11 zustandekommt.

Während die in Fig. 1 nur schematisch angedeuteten aktiven Magnet-Schwebelageranordnungen 19 und 20 mit entsprechenden Erregerwicklungen ausgestattet sind, kann in bestimmten Fällen auch eine vereinfachte Magnet-Schwebelagerkonstruktion vorgesehen sein, die sowohl auf der Seite der Rotorwelle 1 als auch auf der Seite der die Abstützung zum Außengehäuse 14 vornehmenden Lager entsprechend magnetisierte Permanentmagnetkörper aus Seltenerden-Magnetmaterial vorsieht.

Das Außengehäuse 14 des Turbogenerators umschließt die Rotorwelle mit dem darauf angeordneten Polrad, die Hilfslager 21 und 22, die Magnet-Schwebelageanordnungen 19 und 20 sowie die gesamte Statorkonstruktion hermetisch und ist mit einem Anschluß 23 zum Evakuieren des Außengehäuseinnenraums mittels einer Vakuumpumpe 24 versehen. Es sei angemerkt, daß bei praktischen Ausführungsformen das Außengehäuse 14 selbstverständlich entsprechend unterteilt ausgeführt ist, um die einwandfreie Herstellung, die Montage der Generatorteile, die Montage der Kühlmittelkreisläufe und den dichten Gehäusezusammenbau zu ermöglichen. Entsprechende Flanschverbindungen der Gehäuseteile sind in der Zeichnung zur Vereinfachung der Darstellung weggelassen, durch den Fachmann jedoch ohne Schwierigkeiten zu ergänzen. Die Gehäusewandstärken sind in allen Bereichen so ausgeführt, daß das Außengehäuse 14 dem Umgebungsdruck bei Evakuierung des Gehäuseinnenraumes standzuhalten vermag. Entsprechendes gilt für die Druckdichtigkeit der Anschlüsse 16 und 17 und der Durchführung 18.

Die an den freien Raum zwischen dem Stator und dem Rotor angrenzenden Flächen, vorzugsweise die zylindrischen Innenflächen des Isoliermantels 13 und des Statorkörpers 11 sowie die zylindrischen Außenflächen der Haltemanschette 10 und der Wellenbünde 2 und 3, sind mit einer dünnen Verspiegelungsschicht versehen, die in Fig. 1 nicht gezeichnet ist. Diese Verspiegelungsschichten vehindern einen Wärmeübergang durch Strahlung zwischen Rotor und Stator, nachdem derjenige Anteil eines solchen Wärmeüberganges, der durch Konvektion hätte bewirkt werden können, bereits durch die Evakuierung des Spaltraums zwischen Rotor und Stator beseitigt worden ist.

Zu den Erwärmungsvorgängen bei Turbogeneratoren der hier angegebenen Art sei folgendes ausgeführt:

Wird zur Verminderung der Luftreibung und der luftreibungsbedingten Erwärmung der Spaltraum zwischen Rotor und Stator zusammen mit den Lagerspalträumen zwischen der Rotorwelle und den rotorabstützenden Lageranordnungen evakuiert, dann stellt der gesamte Rotor mit einem durch Permanentmagneten das Erregerfeld erzeugenden Polrad eine thermisch weitgehend isolierte Einheit dar, die vor einer Aufheizung aus der Rotorumgebung, etwa vom Statorkörper aus geschützt werden muß. Dieser Schutz vor einer Aufheizung geschieht bei dem hier angegebenen Turbogenerator zum einen durch die Isolationswirkung des evakuierten Luftspaltes 15 selbst und gegebenenfalls durch die vorher erwähnten Spiegelbeläge zur Unterbrechung eines Wärmetransports durch Strahlung. Zum anderen wird durch Herstellung des Statorkörpers 11 aus weichmagnetischem Pulververbundwerkstoff dafür Sorge getragen, daß selbst bei in der Statorwicklung 12 fließenden hochfrequenten Strömen die Erwärmung des Statorkörpers durch Ummagnetisierungsverluste und Wirbelströme gering bleibt. Die Erwärmung des Statorkörpers und der Statorwicklung wird durch Kühlmitteldurchleitung weiter herabgesetzt.

Wird die Statorwicklung 12 im Supraleitungsbereich betrieben, so spielt die thermische Einwirkung des Stators auf den Rotor ohnedies keine Rolle. In diesem Falle kann es allerdings vorkommen, daß hochfrequente Statorströme bei Oberwellenhaltigkeit Magnetfeldkomponenten erzeugen, welche auf die Rotorkonstruktion rückwirken und dort durch Wirbelströme eine Erwärmung des Rotors hervorrufen können, die wiederum eine Erwärmung der rotomahen Bereiche des Stators herbeiführen könnte. Eine solche Rückerwärmung wird aber bei der hier angegebenen Konstruktion wiederum durch den evakuierten Luftspalt zwischen Rotor und Stator und gegebenenfalls durch die eine Strahlungssperre bildenden Verspiegelung auf den den Luftspalt begrenzenden Flächen verhindert, so daß der Supraleitungsbetrieb im Stator nicht gestört wird.

Damit ist die Beschreibung des eigentlichen Generatorteils des hierangegebenen Turbogenerators im wesentlichen abgeschlossen. Unter Bezugnahme auf die Fig. 1 und 3 sei nun auf die Einleitung des mechanischen Antriebsmomentes in das Außengehäuse 14 und auf die Rotorwelle 1 eingegangen. Das Außengehäuse 14 ist an einer Seite mit einem koaxialen, zylindrischen Gehäuseansatz 26 verminderten Durchmessers versehen. Mindestens im Bereich dieses Gehäuseansatzes 26 besteht das Außengehäuse 14 aus einem magnetfelddurchlässigen Material, beispielsweise einem vergleichsweise dünnwandigen Hohlzylinder aus unmagnetischem Stahl oder aus Aluminium. Nur als Beispiel für die Ausbildung des zylindrischen Gehäuseansatzes 26 als gesondertes Gehäuseteil sei hier die Konstruktionsmöglichkeit angegeben, den zylindrischen Gehäuseansatz 26 als Ring zwischen Profilabsätzen benachbarter Gehäuseteile einzuspannen, wobei das Zusammenspannen dieser Gehäuseteile mittels eines Zugankers erfolgt, der durch eine über die gesamte Länge der Rotorwelle 1 geführte Durchgangsbohrung dieser Rotorwelle zur jeweils anderen Gehäuseseite geführt ist.

Innerhalb des Gehäuseansatzes 26 steht diesem ein Abschnitt der Rotorwelle 1 gegenüber, der in einer rundumlaufenden Ausnehmung 27 am Umfang verteilt hohlzylindersektorförmige Permanentmagnetleisten 28, etwa aus Seltenerden-Magnetwerkstoff enthält, welche durch Füllstücke 29 in gleichförmigem umfangsmäßigem Abstand gehalten und zusammen mit den Füllstücken von einer axial aufgezogenen oder als Bandage aufgewickelten, vorgespannten Hülse 30 umgeben sind, ähnlich, wie dies für das Polrad mit den Pennanentmagneten 8 und 9 und den Füllstücken 6 und 7 oben beschrieben wurde. Der die Permanentmagneten tragende Wellenabschnitt, die Permanentmagnetleisten 28, die Füllstücke 29 und die Hülse 30 bilden jedoch hier den generatorseitigen Teil einer berührungslos arbeitenden Magnetkupplung, welche über den magnetfelddurchlässigen zylindrischen Gehäuseansatz 26 hinweg einem äußeren, mit einer Antriebsmaschine gekuppelten Magnetkupplungsteil 31 gegenübersteht.

Der äußere Magnetkupplungsteil 31 hat die Gestalt einer an das Ende einer gelagerten Abtriebswelle einer Antriebsmaschine angesetzten Glocke mit einem den zylindrischen Gehäuseansatz 26 und den das Hilfslager 22 enthaltenden Außengehäuseteil mit Spiel umfassenden Glockeninnenraum, welcher mit den Permanentmagnetleisten 28 jeweils entsprechenden und in Radialrichtung über den Gehäuseansatz 26 und über angrenzende Luftspalte gegenüberstehenden, hohlzylindersektorförmigen Permanentmagnetleisten 32 bestückt ist. Die Permanentmagnetleisten 32 sind ebenfalls aus Seltenerden-Magnetwerkstoffen gefertigt und haben eine den Permanentmagnetleisten 28 jeweils entsprechende radiale Magnetisierung. Die Anzahl von am Umfang der berührungsfreien Magnetkupplung vorgesehenen Permanentmagnetpaare 28 und und 32 ist so gewählt, daß das Kippmoment der Magnetkupplung über dem maximalen Antriebsmoment des Turbogenerators liegt. Da die Magnetfelder des inneren und äußeren Kupplungsteiles der berührungsfrei arbeitenden Magnetkupplung synchron umlaufen, tritt eine Erwärmung der Kupplungsteile im wesentlichen nicht auf. Es kann aber zweckmäßig sein, im Bereich der Magnetkupplung liegende Teile des Außengehäuses 14 aus Isolierwerkstoff, beispielsweise hochfestem Kunstoff oder Glas oder Keramik, zu fertigen, um Wirbelstromverluste aufgrund des Kupplungsbetriebs zu vermeiden.

## Patentansprüche

1. Elektrischer Turbogenerator der Synchromaschinenbauart für Drehzahlen über 30.000 1/min., dessen Rotor Permanentmagnete (8, 9) zur Erzeugung des Erregermagnetfeldes trägt, dessen Stator einen magnetisierbaren Statorkörper (11) und eine abschnittsweise darin eingebettete Statorwicklung (12) enthält, der ferner ein den Rotor (1) und den Stator (11, 12) umgebendes Außengehäuse (14) und schließlich den Rotor beidseits des Stators radial am Außengehäuse (14) abstützende Lageranordnungen (19, 20) in Gestalt im Betrieb berührungsfreier Magnetlagelungen enthält, **dadurch gekennzeichnet, daß** das Außengehäuse (14) gegenüber dem Stator (11, 12) und dem Rotor (1) derart abgedichtet ist, daß der freie Raum mindestens zwischen Stator und Rotor evakuierbar (23, 24) ist, und daß mindestens ein Rotorwellenende eine innerhalb des Außengehäuses (14, 26) gelegene Kupplungshälfte einer berührungsfrei wirkenden Magnetkupplung trägt, deren andere Kupplungshälfte (31) außerhalb des Außengehäuses angeordnet und mit einer Antriebsmaschine gekuppelt ist, wobei mindestens der zwischen den Kupplungshälften befindliche Außengehäuseteil (26) aus magnetfelddurchlässigem Material besteht.

2. Turbogenerator nach Anspruch 1, **dadurch gekennzeichnet, daß** außer den Lageranordnungen (19, 20) für den Rotor insbesondere an den Rotorwellenenden vorgesehene Hilfslager (21, 22) zur Rotorabstützung bei Stillstand im Anlauf oder im Notbetrieb vorgesehen sind.

3. Turbogenerator nach Anspruch 1 oder 2, **dadurch gekennzeichnet, daß** der Rotor eine seine Permanentmagnete (8,9) umgebende hochfeste Manschette (10) aus magnetfelddurchlässigem Material, insbesondere aus unmagnetischem Stahl oder kohlefaserverstärktem Verbundwerkstoff aufweist.

4. Turbogenerator nach einem der Ansprüche 1 bis 3, daß der Rotor und/oder der Stator auf wesentlichen, an den evakuierten Raum angrenzenden Oberflächenbereichen mit einer Verspiegelung versehen ist.

5. Turbogenerator nach Anspruch 4, **dadurch gekennzeichnet, daß** der Rotor außerhalb seiner verspiegelten Oberflächenbereiche mit gegenüberstehenden Flächen des Außengehäuses (14) und/oder der Lageranordnungen (19, 20) zusammenwirkende, strahlungsabgebende Oberflächenbereiche hat.

6. Turbogenerator nach einem der Ansprüche 1 bis 5, **dadurch gekennzeichnet, daß** der Statorkörper (11) und/oder die Statorwicklung (12) von Kühlmittelkanälen, insbesondere für ein Tiefsttemperatur-Kühlmittel, durchzogen ist beziehungsweise sind.

7. Turbogenerator nach Anspruch 6, **dadurch gekennzeichnet, daß** der Stator einen Isolationsmantel (13) zur thermischen Isolation aufweist, welcher mit Teilen seiner Außenfläche an den evakuierten Raum angrenzt.

8. Turbogenerator nach Anspruch 6 oder 7, **dadurch gekennzeichnet, daß** die Statorwicklung (12) mindestens abschnittsweise aus Supraleiterwerkstoff hergestellt ist.

9. Turbogenerator nach einem der Ansprüche 1 bis 8, **dadurch gekennzeichnet, daß** der . Statorkörper (11) aus weichmagnetischem Pulververbundwerkstoff hergestellt ist.

## Claims

1. Electric turbogenerator of the synchronous machine type for speeds above 30,000 rpm, the rotor of which bears permanent magnets (8, 9) to generate the exciting magnetic field, the stator of which contains a magnetisable stator body (11) and a stator winding (12) embedded in sections therein, which generator contains in addition an outer housing (14) surrounding the rotor (1) and the stator (11, 12) and finally arrangements of bearings (19, 20), in the shape of magnetic bearings which are contactless during operation and which support the rotor radially on the outer housing (14) on both sides of the stator, **characterised in that** the outer housing (14) is sealed from the stator (11, 12) and the rotor (1) in such a way that the free space at least between stator and rotor can be evacuated (23, 24), and that at least one rotor shaft end bears a half, disposed inside the outer housing (14, 26), of a magnetic coupling acting in a contactless manner, the other half (31) of which is disposed outside the outer housing and is coupled with a driving engine, at least the outer housing portion (26) situated between the coupling halves consisting of material which is permeable by a magnetic field,

2. Turbogenerator according to claim 1, **characterised in that,** apart from the arrangements of bearings (19, 20) for the rotor, auxiliary bearings (21, 22) are provided, especially at the rotor shaft ends, to support the rotor when at a standstill, as it starts up or in emergency operation.

3. Turbogenerator according to claim 1 or 2, **characterised in that** the rotor has, surrounding its permanent magnets (8, 9), a high-strength collar (10), formed from material which is permeable by a magnetic field, especially non-magnetic steel or carbon-fibre-reinforced composite material.

4. Turbogenerator according to one of claims 1 to 3, **characterised in that** the rotor and/or the stator are/is provided with a mirror coating on substantial surface regions adjoining the evacuated space.

5. Turbogenerator according to claim 4, **characterised in that** the rotor has, outside its mirror-coated surface regions, radiation-emitting surface regions co-operating with opposite surfaces of the outer housing (14) and/or of the arrangements of bearings (19, 20).

6. Turbogenerator according to one of claims 1 to 5, **characterised in that** the stator body (11) and/or the stator winding (12) have/has running through them coolant channels, especially for a cryogenic coolant.

7. Turbogenerator according to claim 6, **characterised in that** the stator has an insulating jacket (13) for thermal insulation which adjoins with portions of its outer surface the evacuated space.

8. Turbogenerator according to claim 6 or 7, **characterised in that** the stator winding (12) is produced at least in sections from superconducting material.

9. Turbogenerator according to one of claims 1 to 8, **characterised in that** the stator body (11) is produced from soft magnetic powder composite.

## Revendications

1. Turbo-alternateur électrique du type d'une machine synchrone pour des vitesses de rotation supérieures à 30 000 tours/minute, dont le rotor porte des aimants permanents (8, 9) pour générer le champ magnétique d'excitation, dont le stator contient un corps de stator (11) magnétisable et un enroulement de stator (12) dont des sections sont incorporées dans le corps de stator, qui contient en outre un boîtier externe (14) entourant le rotor (1) et le stator (11, 12) et enfin deux agencements de paliers (19, 20) servant d'appui pour le rotor de part et d'autre du stator en position radiale sur le boîtier externe (14), sous la forme de paliers magnétiques travaillant sans contact, **caractérisé en ce que** le boîtier externe (14) est rendu étanche vis-à-vis du stator (11, 12) et du rotor (1) de telle sorte que l'on peut faire le vide (23, 24) dans l'espace libre ménagé au moins entre le stator et le rotor, et **en ce qu'**au moins une extrémité de l'arbre du rotor porte un demi-manchon d'un accouplement magnétique travaillant sans contact, disposé à l'intérieur du boîtier externe (14, 26), l'autre demi-manchon (31) dudit accouplement étant disposé à l'extérieur du boîtier externe et étant accouplé à une machine d'entraînement, au moins la partie (26) du logement externe se trouvant entre les demi-manchons étant constituée d'une matière perméable au champ magnétique.

2. Turbo-alternateur selon la revendication 1, **caractérisé en ce qu'**on prévoit, en plus des agencements de paliers (19, 20), pour le rotor, des paliers auxiliaires (21, 22) prévus en particulier sur les extrémités de l'arbre du rotor pour le logement du rotor à l'état de repos lors du démarrage ou en régime de secours.

3. Turbo-alternateur selon la revendication 1 ou 2, **caractérisé en ce que** le rotor présente une manchette (10) très résistante qui entoure les aimants permanents (8, 9) du premier cité, constitué d'une matière perméable au champ magnétique, en particulier d'un acier amagnétique ou d'un matériau composite renforcé par des fibres de carbone.

4. Turbo-alternateur selon l'une quelconque des revendications 1 à 3, **caractérisé en ce que** le rotor et/ou le stator sont munis d'une couche réfléchissante essentiellement sur les zones superficielles adjacentes à l'espace qui a été purgé.

5. Turbo-alternateur sur la revendication 4, **caractérisé en ce que** le rotor possède, en dehors de ses zones superficielles réfléchissantes, des zones superficielles émettant un rayonnement coopérant avec les surfaces opposées du boîtier externe (14) et/ou des agencements de paliers (19, 20).

6. Turbo-alternateur selon l'une quelconque des revendications 1 à 5, **caractérisé en ce que** le corps de stator (11) et/ou l'enroulement de stator (12) est, respectivement sont traversés par des canaux destinés à un réfrigérant, en particulier à un réfrigérant pour de très basses températures.

7. Turbo-alternateur selon la revendication 6, **caractérisé en ce que** le stator présente une enveloppe isolante (13) pour l'isolation thermique qui est adjacente, avec des parties de sa surface externe, à l'espace qui a été purgé.

8. Turbo-alternateur selon la revendication 6 ou 7, **caractérisé en ce que** l'enroulement de stator (12) est fabriqué, au moins par sections, à partir d'un matériau supraconducteur.

9. Turbo-alternateur selon l'une quelconque des revendications 1 à 8, **caractérisé en ce que** le corps de stator (11) est fabriqué à partir d'un matériau composite pulvérulent de coercitivité basse.
